# FASCICULE DE BREVET EUROPEEN

(11) **EP 0 562 142 B1**
(45) Date de publication et mention de la délivrance du brevet: **04.02.1998**
(21) Numéro de dépôt: 92105206.4
(22) Date de dépôt: 26.03.1992
(51) Int. Cl.: B32B 17/10, B32B 31/00, B29C 43/36

(54) **Poche à vide pour la fabrication de verre de sécurité**
Vakuumsack zur Herstellung von Sicherheitsglas
Vacuum bag for making safety glass

(43) Date de publication de la demande: 29.09.1993
(73) Titulaire: PETER ARROW LIMITED, Stillorgan (IE)
(72) Inventeur:
(74) Mandataire: Meyers, Ernest

(56) Documents cités:
- WO-A-85/02371
- FR-A- 2 215 314
- FR-A- 2 578 485
- FR-A- 2 659 077
- US-A- 1 740 989
- US-A- 1 775 123
- US-A- 2 837 453
- US-A- 3 933 552
- US-A- 4 715 805

## Description

La présente invention concerne une poche à vide pour la fabrication de verre de sécurité destinée à recevoir et contenir une plaque de verre plane ou galbée et à être suspendue, avec celle-ci, sur un support mobile traversant un four de fusion, comprenant une zone de fermeture étanche le long d'un côté de la poche, une zone de drainage, du côté opposé, formant le fond de la poche avec des moyens de raccordement sur une pompe à vide pour réaliser un vide à l'intérieur de la poche et une zone centrale destinée à contenir la plaque de verre. Une telle poche à vide est décrite dans le document FR-A-2 215 314.

Quoique n'y étant pas limitée, l'invention vise plus particulièrement la fabrication de verre de sécurité feuilleté, notamment des pare-brise de voitures. Ces pare-brise sont fabriqués à partir d'une structure feuilletée comprenant une plaque de verre inférieure, une plaque de verre supérieure et une feuille de matière synthétique disposée entre les deux plaques de verre. Le pare-brise est réalisé par fusion de la feuille de matière synthétique, en présence d'une forte compression entre les deux plaques de verre pour réaliser leur adhésion durable de part et d'autre de la feuille transparente de matière synthétique. Si la fusion ne présente pas de problème et peut être réalisée simplement dans un four à fusion, par contre, la compression ne peut pas, pour des raisons évidentes de risque de casse des plaques de verre, être réalisée dans un dispositif de serrage mécanique. C'est la raison pour laquelle la fabrication est réalisée dans des poches dans lesquelles on établit le vide nécessaire à un serrage suffisant des deux plaques de verre.

En vue du traitement dans le four de fusion ces poches sont suspendues sur des, supports mobiles, appelés mannequins. Ces mannequins sont montés sur une chaîne sans fin qui traverse le four. A l'entrée de celui-ci les plaques de verres sont introduites dans les poches attachées aux mannequins et ces poches sont, avant l'entrée dans le four, fermées, de manière étanche, le long de la zone de fermeture, tandis que la zone inférieure de drainage des poches est raccordée à une pompe à vide.

Les poches utilisées jusqu'à présent sont des poches plates, de forme rectangulaire et équipées d'accessoires pour leur montage sur les mannequins. Le vide est réalisé entre les deux parois de la poche par l'intermédiaire d'une ou plusieurs tubulures prévues le long de la zone de drainage. Les parois de la poche sont constituées par un tissu de support enduit d' élastomère ou de plastomère sur chaque face, peu élastique, qui vient s'appliquer sur le complexe feuilleté constitué des plaques de verre et de la feuille intermédiaire et épouse de ce fait la forme du pare-brise.

Ces poches, notamment leur zone de raccordement à la pompe à vide ne permettent pas une réalisation optimale du vide à l'intérieur de la poche, surtout lorsque le caoutchouc commence à vieillir. Or, le principe de répartition du vide et l'établissement uniforme de celui-ci est primordial, car il faut pendant les quinze premières secondes du cycle que le dégazage de toute la zone centrale soit réalisé et que le vide soit maintenu pendant tout le cycle de dégazage d'environ soixante minutes du pare-brise dans le four.

Un autre inconvénient de ces poches connu est dû au fait que leurs parois comportent, du côté intérieur, un revêtement en caoutchouc ou élastomère. Or, le caoutchouc, notamment lorsqu'il commence à vieillir, est à l'origine d'une pollution de la surface du verre, ce qui nécessite un passage du pare-brise dans une autoclave à la sortie du four afin de rendre le verre transparent.

Les poches actuelles sont également trop rigides, ce qui rend leur utilisation problématique lorsque le pare-brise est galbé. Or, la demande de pare-brise galbés, notamment pour les voitures de l'avenir est de plus en plus grande. Ces nouveaux pare-brise sont en effet très fortement galbés dans le sens de la largeur de la voiture avec des extrémités très pointues. Ils sont en outre fortement galbés dans le sens transversal avec une forme en "S" avec un prolongement dans le toit de la voiture et un prolongement vers le capot de la voiture. Il est évident que les poches relativement rigides ne sont plus adaptées pour de tels pare-brise, étant donné que si le vide doit contribuer à la déformation de la poche pour épouser la forme du pare-brise, son effet de serrage des plaques de verre diminue en conséquence. En outre, les contraintes exercées sur la poche dans le cas d'un pare-brise très galbé augmentent fortement les risques de casse de celui-ci. Tous ces inconvénients sont actuellement la cause d'une proportion de déchets de l'ordre de 5 à 8 % lors du traitement des pare-brise dans un four de fusion.

Le but de la présente invention est de prévoir une nouvelle poche à vide qui permet d'éliminer ces inconvénients, autrement dit, une poche qui permet de créer rapidement un vide efficace et uniforme à l'intérieur de la poche et qui épouse parfaitement la forme des pare-brise, même ceux qui sont fortement galbés.

Pour atteindre cet objectif, la poche proposée par la présente invention est essentiellement caractérisée en ce que la zone de drainage est constituée d'un fourreau creux en caoutchouc toilé s'étendant sur toute la longueur du fond de la poche et relié à la zone centrale par un profilé en caoutchouc pourvu de lumières transversales formant des communications entre l'intérieur de la poche et le creux du fourreau et par un tube métallique flexible, non étanche, s'étendant à travers toute la longueur du creux du fourreau. Le tube métallique est, de préférence, une gaine spiralée en métal.

L'avantage de cette conception de la zone de drainage est que celle-ci est suffisamment flexible pour s'adapter au bords et contours du pare-brise, mais qu'elle reste indéformable sous l'effet du vide, c'est-à-dire que celui-ci n'engendre pas d'obstruction de la zone de drainage par collapsage. Il en résulte que le vide est établi uniformément sur toute la longueur de la poche avec très peu de perte de charge. Alors que dans les poches classiques la formation du vide demande au moins cinq secondes, dans la poche selon la présente invention, le vide est réalisé au bout de deux secondes.

Selon une autre caractéristique, la poche est constituée, dans la zone centrale, d'un support textile intérieur revêtu extérieurement d'une couche d'élastomère assurant l'étanchéité. La poche n'est donc enduite que sur la face extérieure par un élastomère assurant l'étanchéité. Etant donné que sur la face intérieure c'est le textile qui est en contact avec le verre, celui-ci ne colle pas sur le pare-brise, ce qui facilite le démoulage et empêche la pollution du verre. Le textile intérieur de la poche contribue, en outre, à une meilleure formation du vide. De plus, l'épaisseur des parois de la poche ne dépasse plus 0,8 à 0,9 mm, ce qui améliore la transmission de chaleur et réduit le temps de passage dans le four.

Selon une autre caractéristique, le support textile présente une élasticité tridimensionnelle et, à cet effet, peut être constitué par un textile tricoté. Cette caractéristique permet à la poche d'épouser parfaitement la forme d'un pare-brise fortement galbé, de sorte que le vide contribue entièrement au serrage des deux plaques de verre du pare-brise, au lieu d'être utilisé pour déformer la poche conformément à la courbure du pare-brise.

Selon une autre caractéristique de l'invention, la zone centrale comporte au moins deux régions bombées par rapport aux plans de la poche, ces régions pouvant être de forme triangulaire. Cette caractéristique contribue également à faciliter la déformation de la poche conformément aux courbures du pare-brise, ceci sans contrainte sur celui-ci.

D'autres particularités et caractéristiques ressortiront de la description détaillée d'un mode de réalisation avantageux présenté, ci-dessous, à titre d'illustration, en référence aux figures annexées dans lesquelles :
la figure 1 représente schématiquement une partie d'une installation de transport des poches à vide et des pare-brise à travers un four à cuve;
la figure 2 montre schématiquement une vue latérale d'une poche à vide;
la figure 3 représente une coupe agrandie à travers la zone de drainage de la poche à vide;
la figure 4 représente une coupe à travers la zone de drainage suivant le plan de coupe IV-IV de la figure 3;
la figure 5 représente une coupe à travers la zone de drainage suivant le plan de coupe V-V de la figure 3 et

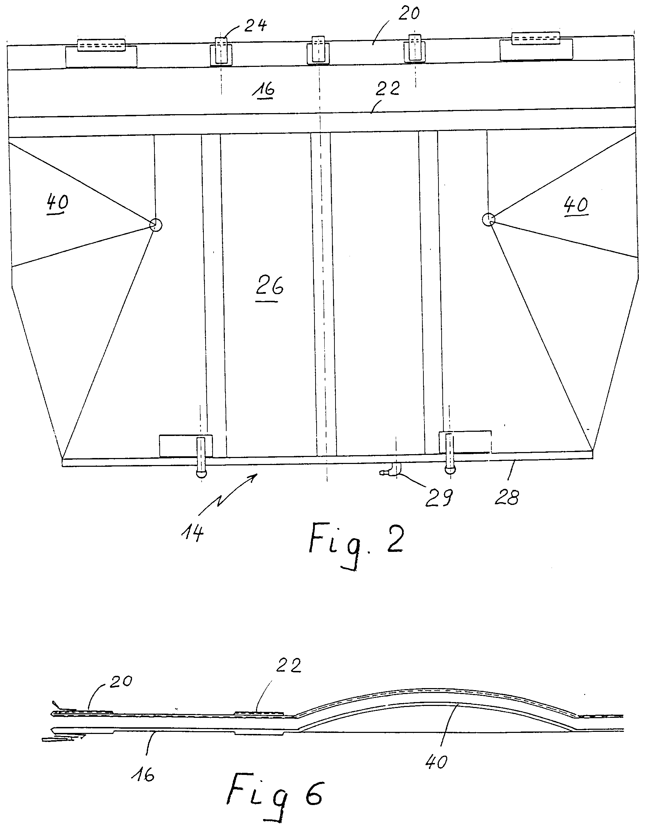

la figure 6 représente une coupe transversale à travers une zone bombée de la poche à vide.

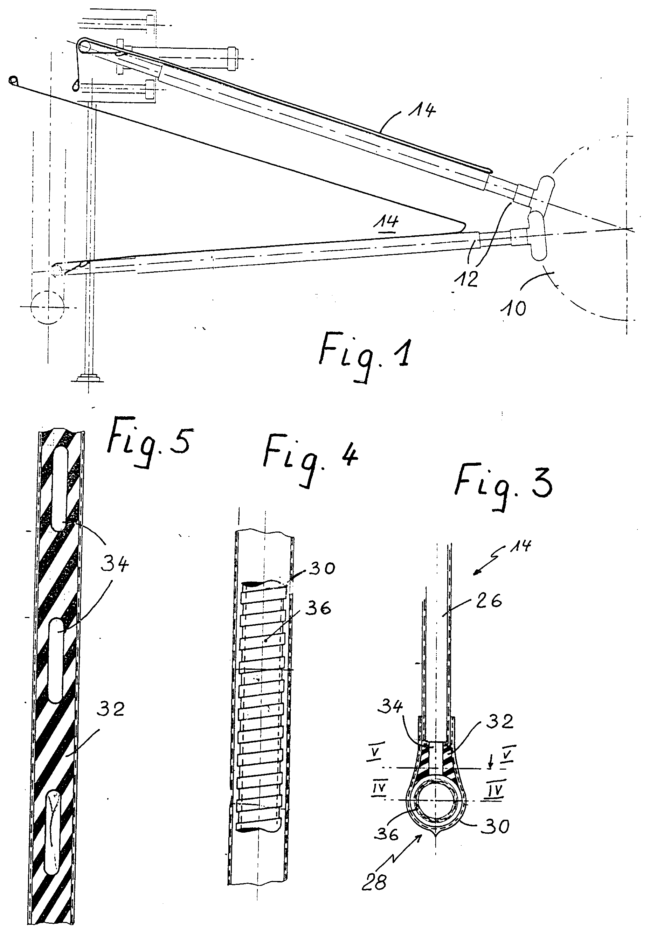

La figure 1 représente schématiquement l'extrémité d'un convoyeur sans fin 10 destiné à transporter des pare-brise à travers un four de fusion non représenté. Ceci est réalisé grâce à des supports, désignés généralement par des mannequins 12, dressés sur le convoyeur 10. A l'extrémité du convoyeur 10, une poche à vide 14 est accrochée à chaque mannequin 12 et un pare-brise, non représenté, est chargé dans chaque poche tant que celle-ci est ouverte. Le mouvement du convoyeur 10, dans le sens des aiguilles d'une montre sur la figure 1, provoque la fermeture automatique de chaque poche 14 par le repli des deux parois, l'une sur l'autre et par le rabattement des bords supérieurs à la manière de fermeture d'une enveloppe. Après la fermeture des poches 14, comme sur le mannequin supérieur 12 sur la figure 1, chaque poche est raccordée sur une pompe à vide, non représentée, et transférée, ensuite, avec son mannequin et par le convoyeur 10, à travers le four.

La figure 2 montre schématiquement une poche à vide 14 conformément à la présente invention. La poche 14 comporte une zone supérieure 16 qui est la zone de fermeture. Cette zone de fermeture comporte deux bandes de renforcement plus épaisses 20, 22 destinées à assurer la fermeture étanche des poches, ainsi que des agrafes 24 pour suspendre les poches 14 sur leur mannequin 12.

La zone centrale 26 de la poche 14 représente le conteneur du pare-brise, tandis que le bord inférieur opposé à la zone de fermeture 16 forme un zone de drainage 28 à travers laquelle le vide est réalisé à l'intérieur de la poche et qui, à cet effet, comporte un ou plusieurs raccords 29 destinés à être connectés sur une source à vide lors du transfert des poches 14 à travers le four.

On va maintenant décrire plus en détails la zone de drainage 28 en référence simultanée aux figures 3,4 et 5. La zone de drainage 28 comporte un fourreau tubulaire 30 en caoutchouc toilé s'étendant sur toute la longueur de la poche 14 et relié à la zone centrale 26 par l'intermédiaire d'un profilé en caoutchouc 32. Ce profilé 32 comporte sur toute sa longueur des lumières allongées 34 de section rectangulaire à bord arrondi. Ces lumières 34 assurent la communication entre l'intérieur du fourreau et l'intérieur de la zone centrale 26 de la poche 14. A l'intérieur du fourreau 30 se trouve un tube 36 flexible et étanche, mais qui résiste aux sollicitations de déformation et d'écrasement sous l'effet du vide. Ce tube 36 est avantageusement une gaine métallique spiralée du genre flexible de douche.

La confection de la zone de drainage 28 peut être réalisée de la manière suivante. Autour d'un tube en téflon dont la longueur correspond à celle du fourreau 30 est enroulé un tissu enduit cru. Les raccords 29 sont à connecter à ce tube en téflon. On encastre ensuite dans le tube téflon un peigne en métal d'une épaisseur de 8 mm dont les dents définissent les lumières 34. Le tube et le peigne sont ensuite enveloppés dans du tissu enduit cru pour définir le profilé 32 et pour former le raccord avec la zone centrale 26 de la poche 14. L'ensemble est ensuite vulcanisé en autoclave selon la méthode de vulcanisation dite "poche à vide ". Cette opération peut également s'effectuer sur une presse chauffante à membranes. Après vulcanisation, le peigne métallique ainsi que le tube téflon sont retirés pour obtenir le fourreau 30 étanche avec les lumières 34 de liaison avec l'intérieur de la poche 14. La gaine métallique spiralée 36 est ensuite introduite dans le fourreau 30 et les deux extrémités opposées du fourreau 30 sont ensuite bouchées par des capuchons métalliques filetés étanches, mais démontables pour changer, en cas de besoin, la gaine métallique 36.

Selon une autre particularité de la présente invention les parois de la poche 14 comportent dans la zone centrale 26 plusieurs, dans l'exemple représenté deux régions 40 bombées par rapport au plan de la poche. Ces régions bombées 40, ont, de préférence, une forme triangulaire dont une pointe est dirigée vers le milieu. Ces régions bombées 40 qui sont formées par un surplus de matière des parois de la poche évitent, lors du vide, des contraintes trop importantes sur un pare-brise très galbé et permettent aux deux parois de la poche d'épouser la forme du pare-brise sans entraîner une tension trop importante dans le support textile de la poche et sans casser le verre du pare-brise sous l'effet du vide.

Les parois de la poche sont constituées d'un support textile, par ex. en polyester, polyamide, coton, etc... d'un poids d'environ 250 grammes par mètre carré et dont les propriétés peuvent être variables suivant les différentes zones de la poche. Ce support textile est rendu adhésif par projection d'une matière d'accrochage pour un élastomère dans les zones qui doivent recevoir un feuille d'élastomère pour assurer l'étanchéité.

Le support textile devra être tissé dans la zone de fermeture 16 qui doit rester souple, mais sans possibilité de déformation pour assurer la fermeture étanche.

Dans la zone centrale 26 le support textile présentera, de préférence, une élasticité tridirectionnelle, obtenue, par ex., par un support textile tricoté, de manière à éviter toutes les contraintes internes du tissu lorsque celui-ci est soumis au vide pour venir s'appliquer sur les deux faces du pare-brise. Cette élasticité contribue, par conséquent, en association avec les régions bombées 40 à une adaptation optimale des parois de la poche à une forme galbée du pare-brise. A titre d'exemple, un tissu tissé non élastique ne permet qu'un allongement très faible d'environ 0,5 % sous un effort de cinq kilos, alors qu'un tissu élastique, permet un allongement de 80 % lorsqu'il est soumis à la même contrainte de déformation de cinq kilos.

Comme décrit ci-dessus, l'étanchéité extérieure est réalisée par une feuille élastomère ou plastomère, utilisée en feuilles crues, qui sont posées à différents endroits sur le support textile enduit et rendu adhésif. Dans la zone de fermeture 16 l'élastomère est appliqué de part et d'autre du support textile jusqu'à une épaisseur d'environ 2 mm afin d'assurer une étanchéité parfaite vers l'extérieur et vers l'intérieur.

Dans la zone centrale 26 l'élastomère n'est appliqué que sur la face extérieure du support textile. Ceci est suffisant pour assurer l'étanchéité vers l'extérieur et présente, en outre, l'avantage qu'à l'intérieur, c'est le textile qui sera en contact avec le verre au lieu de l'élastomère, ce qui évite toute pollution du verre par le contact avec de la gomme, notamment lorsque celle-ci vieillit et facilite le démoulage du pare-brise.

En outre, l'épaisseur des parois enduites d'un côté seulement du textile est réduite à 0,8 à 0,9 mm, ce qui assure une bonne transmission de la chaleur et rend le traitement thermique plus efficace et plus rapide.

## Revendications

1. Poche à vide pour la fabrication de verre de sécurité destiné à recevoir et contenir une plaque de verre plane ou galbée et à être suspendue avec celle-ci sur un support mobile (12) traversant un four de fusion, comprenant une zone (16) de fermeture étanche le long d'un côté de la poche (14), une zone de drainage (28) du côté opposé formant le fond de la poche (14) avec des moyens de raccordement sur une pompe à vide pour réaliser un vide à l'intérieur de la poche (14) et une zone centrale (26) destinée à contenir la plaque de verre, caractérisée en ce que la zone de drainage (28) est constituée d'un fourreau creux (30) en caoutchouc toilé s'étendant sur toute la longueur du fond de la poche et relié à la zone centrale (26) par un profilé (32) en caoutchouc pourvu de lumières transversales (34) formant des communications entre l'intérieur de la poche (14) et le creux du fourreau (30) et par un tube métallique flexible (36) et non étanche s'étendant à travers toute la longueur du creux du fourreau (30).

2. Poche selon la revendication 1. caractérisée en ce que le tube métallique (36) est une gaine spiralée en métal.

3. Poche selon la revendication 1, caractérisée en ce que les parois de la poche sont constituées dans la zone centrale (26) d'un support textile intérieur revêtu extérieurement d'une couche d'élastomère assurant l'étanchéité.

4. Poche selon la revendication 3, caractérisée en ce que le support textile présente une élasticité tridimensionnelle.

5. Poche selon la revendication 4, caractérisée en ce que le support est en textile tricoté.

6. Poche selon la revendication 1, caractérisée en ce que la zone centrale (26) comporte des régions bombées (40) par rapport au plan de la poche.

7. Poche selon la revendication 6, caractérisée en ce que les dites régions bombées (40) ont une forme triangulaire.

## Claims

1. Vacuum bag for the manufacture of safety glass, intended to receive and contain a plane or curved sheet of glass and to be suspended with the latter from a movable support (12) passing through a melting oven, which includes a sealed closure region (16) along one side of the bag (14), a drainage region (28) on the opposite side, forming the bottom of the bag (14) with means of connection to a vacuum pump in order to create a vacuum inside the bag (14), and a central region (26) intended to contain the sheet of glass, characterized in that the drainage region (28) consists of a hollow sheath (30) of cloth-reinforced rubber extending over the entire length of the bottom of the bag and connected to the central region (26) by a rubber profile (32) provided with transverse slots (34) forming communications between the inside of the bag (14) and the hollow of the sheath (30) and by an unsealed flexible metal tube (36) extending across the entire length of the hollow of the sheath (30).

2. Bag according to Claim 1, characterized in that the metal tube (36) is a spiralled metal tubing.

3. Bag according to Claim 1, characterized in that the walls of the bag consist, in the central region (26), of an inner textile support coated on the outside with an elastomer layer which provides the sealing.

4. Bag according to Claim 3, characterized in that the textile support exhibits three-dimensional elasticity.

5. Bag according to Claim 4, characterized in that the support is made of knitted textile.

6. Bag according to Claim 1, characterized in that the central region (26) includes areas (40) which are domed with respect to the plane of the bag.

7. Bag according to Claim 6, characterized in that the said domed areas (40) have a triangular shape.

## Patentansprüche

1. Vakuumsack zur Herstellung von Sicherheitsglas welcher dazu bestimmt ist eine flache oder gewölbte Glasplatte aufzunehmen und zu enthalten und mit dieser an einem bewegbaren einen Schmelzofen durchdringenden Ständer (12) aufgehängt zu werden, mit einem luftdichten Schliessbereich (16) entlang einer Seite des Sackes (14), einem den Boden des Sackes (14) bildenden Drainierungsbereich (28) auf der entgegengesetzten Seite mit Mitteln zum Verbinden mit einer Vakumpumpe um Vakum im Innern des Sackes (14) zu entwickeln und einem Zentralbereich (26) zur Aufnahme der Glasplatte, dadurch gekennzeichnet, dass der Drainierungsbereich (28) aus einem sich über die gesamte Länge des Sackbodens erstreckenden Schlauch (30) aus Gewebegummi besteht der über ein Gummiprofil (32) mit dem Zentralbereich (26) verbunden ist, der Querschlitze (34) aufweist, welche Verbindungen zwischen dem Inneren der Sackes (14) und dem Hohlraum des Schlauches (30) bilden und dass ein biegsames luftdurchlässiges Metallrohr (36) sich durch die gesamte Länge des Hohlraums des Schlauchs (30) erstreckt.

2. Sack nach Anspruch 1, dadurch gekennzeichnet, dass das Metallrohr (36) aus einem metallischen Spiralschlauch besteht.

3. Sack nach Anspruch 1, dadurch gekennzeichnet, dass die Seiten des Sackes im Zentralbereich (26) aus einer inneren Textilauflage bestehen, die an der Aussenseite mit einer dichtenden Elastomerschicht überzogen ist.

4. Sack nach Anspruch 3, dadurch gekennzeichnet, dass die Textilauflage eine dreidimensionale Elastizität besitzt.

5. Sack nach Anspruch 4, dadurch gekennzeichnet, dass die Auflage aus gestricktem Textilgewebe besteht.

6. Sack nach Anspruch 1, dadurch gekennzeichnet, dass der Zentralbereich (26) mit Bezug zur Sackebene gewölbte Bereiche (40) aufweist.

7. Sack nach Anspruch 6, dadurch gekennzeichnet, dass die gewölbte Bereiche (40) eine dreieckige Form haben.
